(19) Europäisches Patentamt
European Patent Office
Office européen des brevets

(11) Veröffentlichungsnummer: **0 184 753**
**B1**

(12) # EUROPÄISCHE PATENTSCHRIFT

(45) Veröffentlichungstag der Patentschrift: **14.03.90**

(51) Int. Cl.[5]: **C 07 F 9/38**, C 07 F 9/32, C 07 F 9/30

(21) Anmeldenummer: **85115283.5**

(22) Anmeldetag: **02.12.85**

(54) **Verfahren zur Herstellung von alpha-Aminoalkylphosphon- und von alpha-Aminoalkylphosphinsäuren.**

(30) Priorität: **12.12.84 DE 3445300**

(43) Veröffentlichungstag der Anmeldung:
**18.06.86 Patentblatt 86/25**

(45) Bekanntmachung des Hinweises auf die Patenterteilung:
**14.03.90 Patentblatt 90/11**

(84) Benannte Vertragsstaaten:
**AT BE CH DE FR GB IT LI NL SE**

(56) Entgegenhaltungen:
**CHEMICAL ABSTRACTS, Band 81, Nr. 11, 16. September 1974, Seite 484, Spalte 2, Zusammenfassungsnr. 63728m, Columbus, Ohio, US; J. RACHON et al. "Aminophosphonic acids. 2. Hofmann degradation of carboxamides. A new method for the preparation of alpha-aminophosphonic acids", & Z. CHEM. 1974, 14(4), 152-154**

(73) Patentinhaber: **HOECHST AKTIENGESELLSCHAFT**
**Postfach 80 03 20**
**D-6230 Frankfurt am Main 80 (DE)**

(72) Erfinder: **Bartels, Günter, Dr.**
**Leimenweg 31**
**D-3300 Braunschweig (DE)**

(56) Entgegenhaltungen:
**TETRAHEDRON LETTERS, Nr. 52, 1973, Seiten 5201-5202, GB; M. SOROKA et al. "Hofmann degradation and bromination of amides derived from phosphonoacetic acid"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 184 753 B1

**Beschreibung**

Die Erfindung bezieht sich auf ein Verfahren zur Herstellung von α-Aminoalkylphosphon- und von α-Aminoalkylphosphinsäuren der Formel I

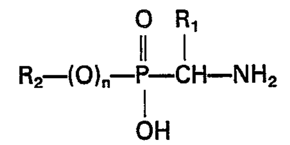

(I),

worin

n = 1 oder 0,
$R_1$ = H, $CH_3$ oder $CH_2—C_6H_5$, und
$R_2$ = H (für n = 1) sowie
= Alkyl oder Phenyl (für n = 0).
Für n = 1 handelt es sich um α-Aminoalkylphosphonsäuren,
für n = 0 um α-Aminoalkylphosphinsäuren.
Die Verbindungen sind z.T. biologisch aktiv wie z.B. die Aminomethylphosphonsäure

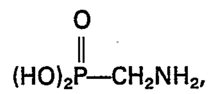

von der eine herbizide und das Pflanzenwachstum regulierende Wirksamkeit bekannt ist; z.T. können die Verbindungen auch zu biologisch aktiven Substanzen weiter verarbeitet werden — vgl. den Artikel von L. Maier "Advances in the Chemistry of Aminophosphinic Acids" in der Zeitschrift "Phosphorus and Sulfur" 1983 Vol. 14, S. 295—322, insbesondere 317—320. Dieser Artikel beschäftigt sich zwar hauptsächlich — wie schon aus dem Titel hervorgeht — mit Aminophosphinsäuren, doch werden dort auch Aminophosphonsäuren mit behandelt.

Deswegen beschreibt Teil A — Preparation of aminophosphinic acids — auf den Seiten 296—315 dieses Artikels nicht nur eine Reihe bekannter Verfahren zur Herstellung von Aminophosphinsäuren, sondern auch verschiedene Methoden zur Herstellung von Aminophosphonsäuren. Nach diesen Verfahren können im Prinzip auch die Verbindungen der vorstehenden Formel I erhalten werden.

Eine in dem genannten Artikel nicht mit aufgeführte Methode ist das in der Arbeit von M. Soroka und P. Mastalerz "Hofmann Degradation and Bromination of Amides derived from Phosphonacetic Acid" (Tetrahedron Letters No. 52, S. 5201—5202, 1973) beschriebene Verfahren zur Herstellung einiger spezieller α-Aminoalkylphosphonsäuren durch Hofmann'schen Abbau und saure Hydrolyse der Ester verschiedener Phosphoncarbonsäureamide.

Durch den Hofmann'schen Abbau können Carbonsäureamide durch Behandlung mit Chlor oder Brom in alkalischem Medium (worin sich die entsprechenden Hypohalogenite bilden) in die um ein C-Atom ärmeren Amine überführt werden (vgl. z.B. Organic Reactions *3* (1946), S. 267ff. "The Hofmann Reaction", insbesondere S. 268); für den Hofmann'schen Abbau wird folgende Reaktionsgleichung angegeben (mit Brom als Halogen):

$$RCONH_2 + Br_2 + 4OH^- \rightarrow R—NH_2 + CO_3^{2-} + 2Br^- + 2H_2O$$

(R = organ. Rest)

Die in der Arbeit von M. Soroka und P. Mastalerz a.a.O. beschriebenen Hofmann'schen Abbaureaktionen können durch folgendes Formelschema wiedergegeben werden:

a)

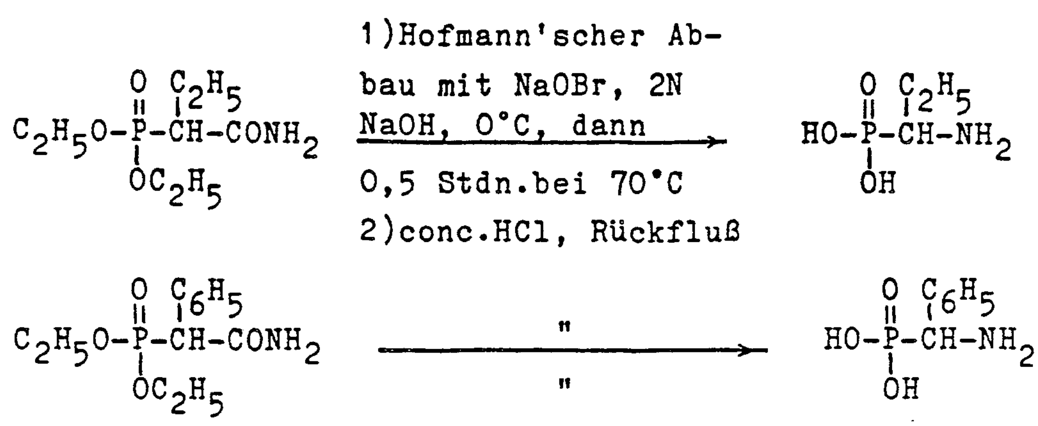


b)

Die Ausbeuten an den entsprechenden α-Aminoalkylphosphonsäuren sollen hier bei 70 bis 80% d.Th. liegen.

Wenn das mit dem Phosphor verbundene C-Atom nicht oder durch andere Grupen substituiert ist, sollen beim Hofmann'schen Abbau in erster Linie halogensubstituierte Phosphoncarbonsäurederivate (und praktisch keine halogenfreien Amine) entstehen:

c) 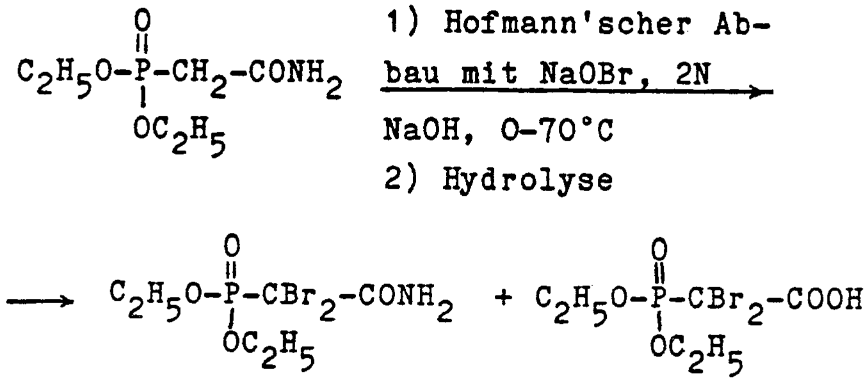


Wenn hier 2 Mol NaOBr anstelle des sonst für den Hofmann'schen Abbau üblichen einen Mols verwendet werden, soll die Ausbeute an der Verbindung Aminocarbonyl-dibrom-methyl-phosphonsäurediethylester

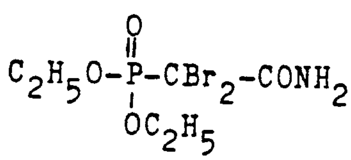

bis zu 75 % betragen.

d) 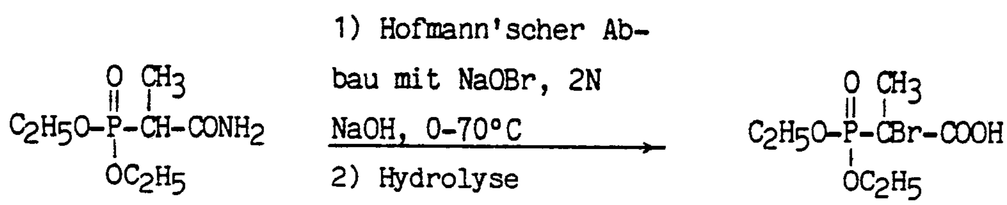


(Ausbeute: 70 %)

Demgegenüber konnten Rachon et al. (Zeitschrift Chemie *14* (1974), 152—154) zeigen, daß der Hofmann'sche Abbau von 1-Aminocarbonylethylphosphonsäurediethylester mit Kaliumhypobromit im siedenden Wasserbad nach Hydrolyse in 50%iger Ausbeute zu 1-Aminoethanphosphonsäure führt.

Nachteilig bei diesem Verfahren ist die mäßige Ausbeute von 50% der Theorie.

e) 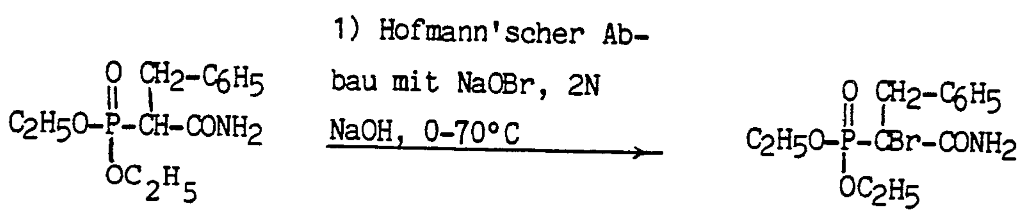


(Ausbeute: 80 %)

Bei weitergehender Hydrolyse werden sicher auch die Phosphonestergruppen in den Produkten der Reaktionen c), d) und e) in die OH-Gruppen umgewandelt.

Wie eigene Versuche gezeigt haben, entsteht auch beim Ersatz des NaOBr durch NaOCl bei der vorerwähnten Reaktion c) praktisch kein halogenfreies Amin:

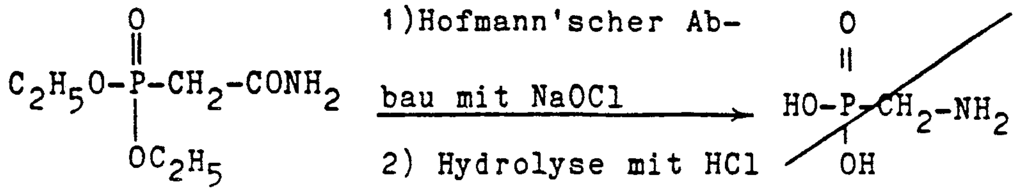


In analoger Weise lieferte in der Phosphinsäurereihe auch der Aminocarbonylmethyl-methylphosphinsäureethylester nicht das theoretisch erwartete Amin:

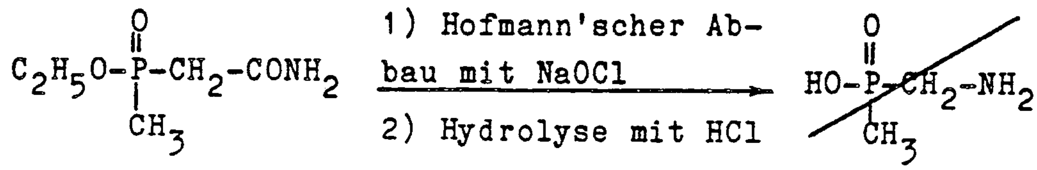


In dem Bestreben, die von M. Soroka und P. Mastalerz a.a.O. beschriebenen — vorstehend unter c), d) und e) wiedergegebenen — Reaktionen so abzuwandeln, daß auch da die normalen halogenfreien Hofmann'schen Abbauprodukte (α-Aminoalkylphosphonsäuren) in hohen Ausbeuten entstehen, sowie in dem Bestreben, diese Reaktion gegebenenfalls auch noch auf andere ähnliche P-C-Verbindungen zu erweitern, wurde nun gefunden, daß dieses Ziel dadurch erreicht wird, daß man nicht von den Estern der entsprechenden Aminocarbonylalkylphosphonsäuren (M. Soroka und P. Mastalerz a.a.O.!), sondern von den jeweiligen Estersalzen ausgeht. In der Aminocarbonylalkyl-phosphinsäurereihe gelingt die Reaktion in analoger Weise mit Aminocarbonylalkylphosphinsäuresalzen als Ausgangsverbindungen.

Erfindungsgegegenstand ist daher ein Verfahren zur Herstellung von α-Aminoalkylphosphon- und von α-Aminoalkylphosphinsäuren der Formel I

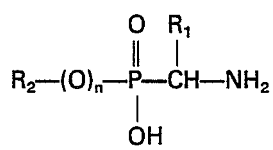

(I),

worin
n = 1 oder 0,
$R_1$ = H, $CH_3$ oder $CH_2—C_6H_5$, und
$R_2$ = H (für n = 1) sowie
= Alkyl oder Phenyl (für n = 0),
das dadurch gekennzeichnet ist, daß man Verbindungen der Formel II

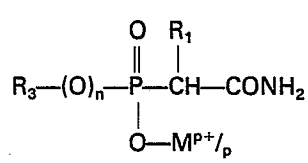

(II),

worin
n und $R_1$ die gleiche Bedeutung wie in Formel I besitzen,
$R^3$ = Alkyl (für n = 1),
= Alkyl oder Phenyl (für n = 0), und
$M^{p+}$ = p-wertiges Kation,
einem Hofmann'schen Abbau unterwirft und die Verbindungen der Formel I in bekannte Weise gewinnt.

Die Ausbeuten an den α-Aminoalkylphosphon- und α-Aminoalkylphosphinsäuren der Formel I liegen hier durchweg zwischen etwa 70 und 90% d.Th. Dies ist außerordentlich überraschend, weil man nach M. Soroka und P. Mastalerz sowie nach den vorerwähnten eigenen Versuchen durch Hofmann'schen Abbau und sauer Hydrolyse der Verbindungen der Formel II in vollveresterter Form hauptsächlich halogenierte Phosphon- und Phosphin-säurederivate und praktisch keine normalen halogenfreien Hofmann-Abbauprodukte (Amine) erhält. Die relativ geringfügige Abänderung der Ausgangsprodukte (Estersalze bzw. Salze anstelle nur der Ester) ließ den gänzlich anderen — erfindungsgemäßen — Reaktionsverlauf in keiner Weise erwarten.

In Formel II für die Ausgangsverbindungen bedeuten bevorzugt

$R_1$ = H oder $CH_3$, und

$R_3$ einen $C_1$—$C_8$-, vorzugsweise einen $C_1$—$C_4$-Alkylrest, insbesondere nur den $C_2H_5$-Rest (für n = 1) bzw. einen $C_1$—$C_8$-, vorzugsweise einen $C_1$—$C_4$-Alkylrest (für n = 0);

$M^{p+}$ bedeutet vorzugsweise $Na^+$ oder $K^+$ (p = 1).

Für n = 1 handelt es sich bei den Verbindungen der Formel II um die Estersalze von Aminocarbonylalkylphosphonsäuren (IIa):

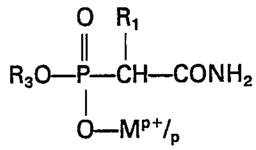

(IIa),

Sie können nach literaturbekannten Verfahren erhalten werden, z.B. durch Umsetzung von Phosphorigsäureestern mit α-Halogencarbonsäureamiden (etwa entsprechend J. Org. Chem. *23,* S., 1883—1886 (1958) mit anschließender partieller Verseifung:

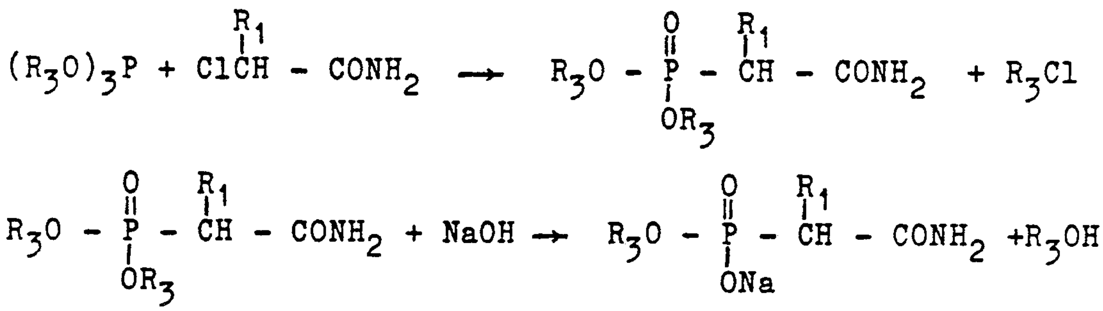

Die partielle Verseifung wird normalerweise durch Umsetzung mit einem Metallhydroxid, vorzugsweise mit Na- oder K-Hydroxid in wässriger oder alkoholischer Lösung durchgeführt.

Für n = 0 sind die Verbindungen der Formel II Salze der Aminocarbonyl-alkyl-phosphinsäuren (IIb):

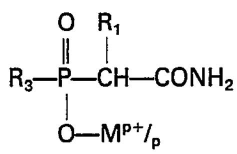

(IIb),

Ihre Herstellung erfolgt ebenfalls nach bekannten Verfahren, z.B. analog der vorerwähnten Darstellung der Aminocarbonyl-phosphonsäure-Estersalze:

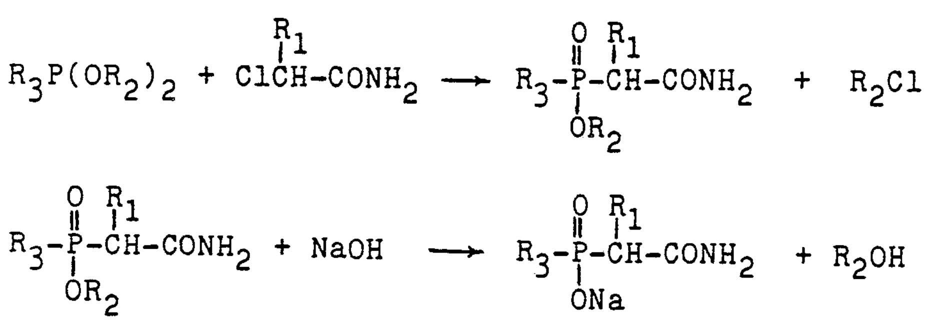

Der Hofmann'sche Abbau der Verbindungen der Formel II wird (mittels Chlor oder Brom/Alkalilauge) durchgeführt, wie dies für diesen Reaktionstyp üblich und bekannt ist.

Vorzugsweise geht man so vor, daß man zunächst durch Umsetzung von Chlor oder Brom in einer Alkalihydroxidlösung einen alkalische Hypohalogenit-Lösung herstellt. In diese Lösung wird die Verbindung II entweder in fester Form oder als wässrige Lösung bei etwa 10 bis 20°C eingetragen. Das Molverhältnis Halogen:Alkalihydroxid:Verbindung II liegt zweckmäßig bei etwa (1 bis 1,2): etwa (4 bis 6): etwa 1.

Nach der Zugabe der Verbindung II wird die Temperatur vorteilhaft für etwa 30 bis 90 Minuten, bevorzugt etwa 30 bis 40 Minuten, auf etwa 50 bis 90°C, bevorzugt auf etwa 60 bis 75°C, erhöht.

Die Aufarbeitung der anfallenden Reaktionslösung erfolgt auf an sich bekannte Weise. Beispielsweise

wird zwecks Freisetzung der α-Aminoalkylphosphon- bzw. α-Aminoalkylphosphin-Säure (I) mit Säuren umgesetzt. Im Falle der Darstellung der α-Aminoalkylphosphonsäuren (Verbindungen der Formel I mit n = 1) geschieht dies z.B. durch Ansäuren mit Salzsäure und etwa 2 bis 4-stündiges Erhitzen auf erhöhte Temperatur, vorzugsweise beim Siedepunkt des Reaktionsmediums (Rückfluß).

Im Falle der Darstellung der α-Alkylaminophosphinsäuren (Verbindungen der Formel I mit n = 0) wird zweckmäßig ebenfalls mit Salzsäure angesäuert, wobei jedoch kein Erhitzen nötig ist.

Die Isolierung des Endprodukts I wird dann (nach der Trennung vom mitentstandenen Alkalihalogenid) nach bekannten Methoden durchgeführt. Vorzugsweise erfolgt die Isolierung durch Eindampfen der salzsauren Lösung und Umsetzung der erhaltenen Hydrochloride in alkoholischer Lösung mit Ethylenoxid, Propylenoxid oder einer schwachen organischen Base wie z.B. mit Pyridin.

Die Erfindung wird nun durch die nachfolgenden Beispiele näher erläutert. Nach den Erfindungsbeispielen (A) folgen noch zwei Vergleichsbeispiele (B), aus denen hervorgeht, daß unter den Bedingungen des Hofmann'schen Abbaus aus Aminocarbonylmethyl-phosphonsäurediethylester und aus Aminocarbonylmethyl-methylphosphinsäureethylester praktisch keine Aminomethanphosphonsäure bzw. Aminomethylmethylphosphinsäure entsteht.

A) Erfindungsbeispiele

Beispiel 1

Aminomethanphosphonsäure

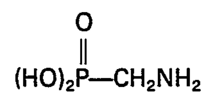

a) Herstellung des Ausgangsproduktes Aminocarbonylmethylphosphonsäuremonoethylester Na-Salz

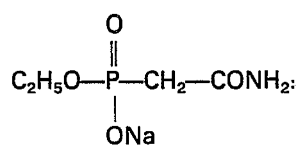

Aminocarbonylmethylphosphonsäure-diethylester wurde in bekannter Weise nach Arbusov aus Triethylphosphit und Chloracetamid erhalten.

Zu einer auf −15°C abgekühlten Lösung von 195,2 g (1 mol) Aminocarbonylmethylphosphonsäure-diethylester in 500 ml abs. Ethanol wurden 48,0 g (1,2 mol) Natriumhydroxid gegeben. Die sich auf 65°C erwärmende Lösung wurde ohne Kühlung 3,5 Stunden gerührt. Anschließend wurde des ausgefallene Produkt abgesaugt und mit Ether gewaschen. Es wurden 156 g (80%) Aminocarbonylmethylphosphonsäuremonoethylester-Natriumsalz erhalten.

b) erfindungsgemäße Umsetzung:

Zu einer bei 0°C aus 67,2 g (1,68 mol) Natriumhydroxid, 29,8 g (0,42 mol) Chlor und 400 ml Wasser hergestellten Hypochlorit-Lösung wurde bei Raumtemperatur eine Lösung von 75,6 g (0,4 mol) Aminocarbonylmethylphosphonsäuremonoethylester-Natriumsalz in 100 ml Wasser gegeben.

Nach 15 Min. wurde 30 Min. auf 75°C erhitzt und bis zur Sättigung Chlorwasserstoff eingeleitet. Die Reaktionslosung wurde 2 h am Rückfluß erhitzt. Nach Abkühlen auf 10°C wurden 108 g Natriumchlorid abfiltriert. Das Filtrat wurde bis zur Trockne eingedampft, mit 150 ml konz. Salzsäure versetzt und weitere 13 g Natriumchlorid abfiltriert.

Es wurde wiederum bis zur Trockne eingedampft und mit 200 ml Methanol und 30 ml Pyridin versetzt. Es wurden 32 g (72%) Aminomethanphosphonsäure erhalten.

Beispiel 2

(Aminomethyl)-methylphosphinsäure

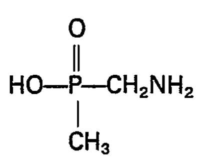

a) Herstellung des Ausgangsprodukts (Aminocarbonylomethyl)-methylphosphinsäure-Na-Salz

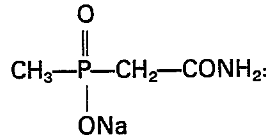

a) (Aminocarbonylmethyl)-methylphosphinsäure wurde in üblicher Weise aus Methanphosphonigsäurediethylester und Chloracetamid dargestellt.

Durch Umsetzung mit Natriumhydroxid analog Beispiel 1 wurde das (Aminocarbonylmethyl)-methylphosphinsäure-Na-Salz erhalten.

b) erfindungsgemäße Umsetzung:

Zu einer wie in Beispiel 1 hergestellten Hypochlorit-Lösung wurde bei Raumtemperatur eine Lösung von 63,6 g (Aminocarbonylmethyl)-methylphosphinsäure-Natriumsalz in 50 ml Wasser gegeben.

Die Temperatur wurde 15 Min bei 20°C gehalten und anschließend wurde 30 Min. auf 60°C erhitzt. Nach Ansäuern der Reaktionslösung durch Einleiten von Chlorwasserstoff wurde bis zur Trockne eingedampft, mit 200 ml Methanol versetzt und das Natriumchlorid (112 g) abgesaugt.

Die Methanollösung wurde mit 24 g Propylenoxid versetzt und das ausgefallene Produkt abgesaugt. Es wurden 35 g (80%) (Aminomethyl)-methylphosphinsäure erhalten.

Beispiel 3

1-Aminoethanphosphonsäure

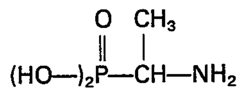

a) Herstellung des Ausgangsproduktes 1-Aminocarbonylethylphosphonsäure-monoethylester-Na-Salz.

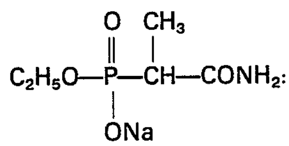

1-Aminocarbonylethylphosphonsäure-diethylester wurde nach einer Literaturvorschrift (J. Am. Chem. Soc. *79*, 1963 (1957)) aus Triethylphosphit und 2-Brompropionsäureethylester mit anschließender Ammonolyse erhalten.

Zu einer Lösung von 83,7 g (0,4 mol) 1-Aminocarbonylethylphosphonsäure-diethylester in 150 ml abs. Ethanol wurden 17,6 g (0,44 mol) Natriumhydroxid gegeben. Die sich aus 35°C erwärmende Lösung wurde 1 Stunde unter Rückfluß gekocht. Nach dem Abkühlen wurde das ausgefallene Produkt (60,3 g entsprechend 74% Ausbeute) abfiltriert und mit Ether gewaschen.

b) erfindungsgemäße Umsetzung:

Zu einer bei 0°C aus 52,8 g (1,32 mol) Natriumhydroxid, 22 g (0,31 mol) Chlor und 300 ml Wasser hergestellten Hypochlorit-Lösung wurden bei Raumtemperatur 61 g (0,3 mol) 1-Aminocarbonylethylphosphonsäuremonoethylester-Natriumsalz gegeben. Nach 15 Min. wurde 30 Min. auf 70°C erhitzt, auf 20°C abgekühlt und mit konz. Salzsäure angesäuert. Nach Eindampfen bis zur Trockne wurde mit 80 ml konz. Salzsäure versetzt, das unlösliche Natriumchlorid (94 g) abfiltriert und das Filtrat 2 h am Rückfluß gekocht. Die Reaktionslösung wurde eingedampft und mit 100 ml Methanol und 25 ml Pyridin versetzt. Es wurden 33 g (88%) 1-Aminoethanphosphonsäure erhalten.

B) Vergleichsbeispiele

Vergleichsbeispiel 1:

Versuch des Hoffmann-Abbaus am Aminocarbonylmethylphosphonsäurediethylester

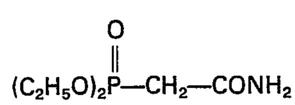

Zu einer bei 0°C aus 67,2 g (1,68 mol) Natriumhydroxid, 29,8 g (0,42 mol) Chlor und 400 ml Wasser hergestellten Hypochlorit-Lösung wurden bei Raumtemperatur 78 g (0,4 mol) Aminocarbonylmethylphosphonsäurediethylester gegeben.

Die sich zunächst ohne Heizung auf 50°C erwärmende Reaktionslösung wurde 30 Min. auf 65°C erhitzt

und nach Abkühlen mit konzentrierter Salzsäure angesäuert. Nach Eindampfen am Rotationsverdampfer wurde mit 150 ml konz. Salzsäure versetzt, das gebildete Kochsalz abfiltriert, das Filtrat 2 Stunden am Rückfluß erhitzt. Nach vollständigem Eindampfen wurde mit 200 ml Methanol und 30 ml Pyridin versetzt. Eine Ausfällung der unter diesen Bedingungen unlöslichen Aminomethanphosphonsäure wurde nicht beobachtet. Darüber hinaus konnten im Dünnschichtchromatogramm nur Spuren von Aminomethanphosphonsäure nachgewiesen werden.

Vergleichsbeispiel 2:
Versuch des Hofmann-Abbaus am (Aminocarbonylmethyl)methylphosphinsäureethylester

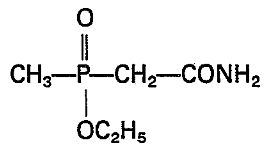

Bei der Umsetzung von 66 g (0,4 mol) (Aminocarbonylmethyl)-methylphosphinsäureethylester unter zum Vergleichsbeispiel 1 identischen Bedingungen konnte in der bei der Aufarbeitung erhaltenen Methanollösung keine Spur (Aminomethyl)-methylphosphinsäure nachgewiesen werden:

**Patentansprüche**

1. Verfahren zur Herstellung von α-Aminoalkylphosphon- und von α-Aminoalkylphosphin-Säuren der Formel I

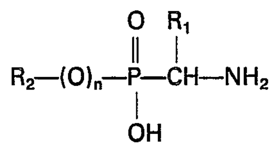
(I)

worin
n = 1 oder 0,
$R_1$ = H, $CH_3$ oder $CH_2—C_6H_5$, und
$R_2$ = H (für n = 1) sowie
= Alkyl oder Phenyl (für n = 0),
dadurch gekennzeichnet, daß man Verbindungen der Formel II

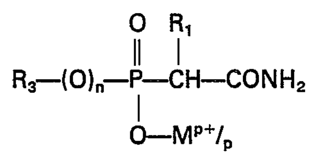
(II)

worin
n und $R_1$ die gleiche Bedeutung wie in Formel I besitzen,
$R^3$ = Alkyl (für n = 1),
Alkyl oder Phenyl (für n = 0), und
$M^{p+}$ = p-wertiges Kation,
einem Hofmann'schen Abbau unterwirft und die Verbindungen der Formel I in bekannter Weise gewinnt.

2. Verfahren nach Anspruch 1, dadurch gekennzeichnet, daß man als Ausgangsverbindungen solche Verbindungen der Formel II einsetzt, bei denen
n = 1 oder 0,
$R_1$ = H oder $CH_3$,
$R_3$ = $C_1—C_8$-, vorzugsweise $C_1—C_4$-Alkyl, insbesondere nur $C_2H_5$ (für n = 1)
bzw. $C_1—C_8$-, vorzugsweise $C_1—C_4$-Alkyl (für n = 0) und
$M^{p+}$ = $Na^+$ oder $K^+$.

3. Verfahren nach den Ansprüchen 1 oder 2, dadurch gekennzeichnet, daß man den Hofmann'schen Abbau durch Umsetzung der Verbindungen II mit Chlor oder Brom/Alkalilauge durchführt.

4. Verfahren nach einem oder mehreren der Ansprüche 1 bis 3, dadurch gekennzeichnet, daß man den Hofmann'schen Abbau bei Temperaturen zwischen etwa 10 und 20°C beginnt und dann bei Temperaturen zwischen etwa 50 und 90°C, vorzugsweise zwischen etwa 60 und 75°C, zu Ende führt.

5. Verbindungen der Formel II

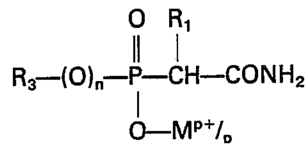

(II)

worin

n 1 oder 0,

$R_1$ H, $CH_3$ oder $CH_2—C_6H_5$,

$R_3$ Alkyl (für n = 1), Alkyl oder Phenyl (für n = 0), und

$M^{p+}$ $Na^+$ oder $K^+$ ist.

**Revendications**

1. Procédé pour préparer des acides α-aminoalkylphosphoniques et α-aminoalkyl-phosphiniques répondant à la formule I

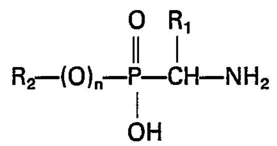

(I)

dans laquelle

n est égal à 1 ou à 0,

$R_1$ représente H, $CH_3$ ou $CH_2C_6H_5$ et

$R^2$ représente H dans le cas où n est égal à 1, et un alkyle ou un phényle dans le cas où n est égal à 0, procédé caractérisé en ce qu'on soumet à une dégadation d'Hofmann des composés répondant à la formule II

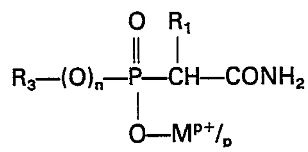

(II)

dans laquelle

n et $R_1$ ont les mêmes significations que dans la formule I,

$R_3$ représente un alkyle dans le cas où n est égal à 1, un alkyle ou un phényle dans le cas où n est égal à 0, et

$M^{p+}$ représente un cation de valence égale à p, et on isole de manière connue les composés de formule I.

2. Procédé selon la revendication 1, caractérisé en ce qu'on utilise, comme corps de départ, des composés de formule II dans lesquels

n est égal à 1 ou 0,

$R_1$ représente H ou $CH_3$,

$R_3$ représente, dans le cas où n est égal à 1, un alkyle en $C_1—C_8$, de préférence en $C_1—C_4$, ou, mieux, uniquement $C_2H_5$, ou, dans le cas où n est égal à 0, un alkyle en $C_1—C_8$, de préférence en $C_1—C_4$, et

$M^{p+}$ représente $Na^+$ ou $K^+$.

3. Procédé selon l'une des revendications 1 et 2, caractérisé en ce qu'on effectue la dégradation d'Hofmann par réaction des composés (II) avec le chlore ou le brome dans une lessive alcaline.

4. Procédé selon l'une quelconque des revendications 1 à 3, caractérisé en ce qu'on commence la dégradation d'Hofmann à des températures comprises entre environ 10 et 20°C, puis on la termine à des températures comprises entre environ 50 et 90°C, de préférence entre environ 60 et 75°C.

5. Composés répondant à la formule II

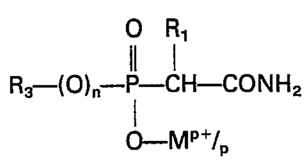

(II)

dans laquelle

n est égal à 1 ou à 0,

$R_1$ représente H, $CH_3$ ou $CH_2—C_6H_5$,

$R_3$ représente un alkyle lorsque n est égal à 1, un alkyle ou un phényle lorsque n est égal à 0, et

$M^{p+}$ représente $Na^+$ ou $K^+$.

**Claims**

1. A process for the preparation of α-aminoalkylphosphonic and of α-aminoalkylphosphinic acids of the formula I

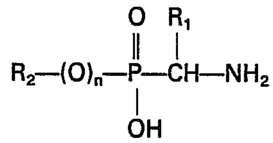

(I),

where

$n = 1$ or 0,

$R_1 = H$, $CH_3$ or $CH_2—C_6H_5$, and

$R_2 = H$ (for $n = 1$) and also

= alkyl or phenyl (for $n = 0$),

wherein compounds of the formula II

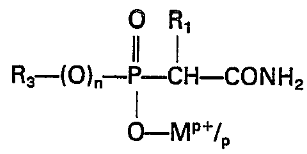

(II)

where

n and $R_1$ have the same meaning as in formula I,

$R_3$ = alkyl (for $n = 1$), alkyl or phenyl (for $n = 0$), and

$M^{p+}$ = p-valent cation,

are subjected to a Hofmann degradation and the compounds of the formula I are obtained in the known manner.

2. The process as claimed in claim 1, wherein those compounds of the formula II are used as starting compounds in which

$n = 1$ or 0,

$R_1 = H$ or $CH_3$,

$R_3 = C_1—C_8$, preferably $C_1—C_4$, alkyl, in particular only $C_2H_5$ (for $n = 1$) or $C_1—C_8$, preferably $C_1—C_4$, alkyl (for $n = 0$) and

$M^{p+} = Na^+$ or $K^+$.

3. The process as claimed in claims 1 or 2, wherein the Hofmann degradation is carried out by reaction of the compounds II with chlorine or bromine/alkali hydroxide.

4. The process as claimed in one or more of claims 1 to 3, wherein the Hofmann degradation is started at temperatures between about 10 and 20°C and then completed at temperatures between about 50 and 90°C, preferably between about 60 and 75°C.

5. The compound of the formula II

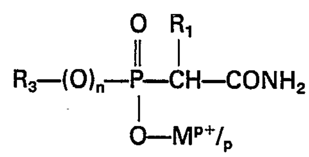

(II)

in which

n is 1 or 0,

$R_1$ is H, $CH_3$ or $CH_2—C_6H_5$,

$R_3$ is alkyl (for $n = 1$), alkyl or phenyl (for $n = 0$) and $M^{p+}$ is $Na^+$ or $K^+$.